# EUROPEAN PATENT APPLICATION

(11) **EP 1 115 076 A1**
(43) Date of publication of application: **11.07.2001**
(21) Application number: 00300055.1
(22) Date of filing: 06.01.2000
(51) Int. Cl.: G06F 17/60

(54) **A reminder and actioning system**

(71) Applicant: Venner, Alan J., London EC1A 7DH (GB); Woodward, John C., London EC1A 7DH (GB); Read, Matthew C., London EC1A 7DH (GB); Weatherly, Christopher C., London EC1A 7DH (GB); Jump, Timothy J. S., London EC1A 7DH (GB); Geary, Stuart L., London EC1A 7DH (GB); Killin, Stephen J., London EC1A 7DH (GB)
(72) Inventor: Geary, Stuart Lloyd, Cornwall TR2 4DS (GB)
(74) Representative: Geary, Stuart Lloyd

(57) **Abstract**

A reminder and actioning system (2) responds to approaching due dates by by sending e-mails to the clients (1) to which they relate. The e-mails contains links of some form so that the client can be taken easily to an instruction giving web page. The web page lists the approaching due dates and allows the client (1) to instruct the operator to perform the actions due on the listed dates. The due dates may be for payment of patent, design ot trade mark renewal fees.

## Description

The present invention relates to a reminder and actioning system.

Proprietors of patents, patent applications, registered designs, registered trade marks and other registered intellectual property rights are usually required to pay renewal fees in order to retain their rights. The burden placed on proprietors to ensure that these fees are paid is high and an inadvertent failure to pay can often lead to the loss of a valuable patent, for example.

Presently, many firms offer a renewals payment service. Typically, such a service involves maintaining a record of a customers patents etc. and either paying the renewals as they fall due or sending a letter requesting instructions to a client as a renewal due date approaches. In the second case, it is necessary that the letter be seen by someone who appreciates its importance and that a letter of instruction be prepared and sent.

The loss of reminder letters and the failure to respond in a timely manner are a significant problem for smaller enterprises where managerial focus is often directed to the production and selling of the firm's products, rather than more abstract matters such as intellectual property.

It is an aim of the present invention to provide a technology-based system for overcoming these problems.

According to the present invention, there is provided a method comprising: -
maintaining a record of information for determining the approach of task due dates for a plurality of client entities;
maintaining hypermedia server means, e.g. a web server and associated CGI (Common Gateway Interface) programs, for receiving task performance instruction;
at a plurality of times, sending an electronic message, e.g. e-mails, to each client entity for which a task due date falls within a succeeding predetermined period; and
receiving an instruction to perform a task from a client entity by means of the hypermedia server means,
wherein said electronic messages include means for causing a client entity to request a page from the hypermedia server means.

A "due date" of a task is a date not later than the last date on which the task may be performed. A person performing the present invention may wish to use a date before an actual due date as a notional due date to allow for communication delays. Also, the calculation of due dates may not make allowance for *dies non.*

Preferably, the electronic messages do not identify the task due dates to which they relate. Thus, the client entity is forced to enter a position to give instructions before receiving the full information, making it less likely for the client entity to defer issuing instructions and possibly missing a deadline.

Preferably the method includes, after receiving said page request, building an HTML (Hypetext Markup Language) form with a control element for each task due date for the requesting client entity, the control elements being configured for indicating whether the respective task is to be performed.

Preferably, the method includes responding to said page request by sending a login form to the requesting client entity, the login form including controls for the input of a username and a password.

Preferably the method includes performing said task in response to said instruction. More preferably, said task is payment of a renewal fee for an intellectual property right.

According to the present invention, there is provided an apparatus for administering a repetitive task, the apparatus comprising: -
hypermedia server means, e.g. a web server and associated CGI programs, for receiving task performance instruction; and
data processing means configured for maintaining a record of information for determining the approach of task due dates for a plurality of client entities and, at a plurality of times, sending an electronic message, e.g. an e-mail, to each client entity for which a task due date falls within a succeeding predetermined period,
wherein said electronic messages include means for causing a client entity to request a page from the hypermedia server means.

Preferably, the electronic messages do not identify the task due dates to which they relate.

Preferably, the hypermedia server means is configured for building an HTML form with a control element for each task due date for the requesting client entity, after receiving said page request, the control elements being configured for indicating whether the respective task is to be performed.

Preferably, the web server is responsive to said page request to send a login form to the requesting client entity, the login form including controls for the input of a username and a password.

An embodiment of the present invention will now be described, by way of example, with reference to the accompanying drawings, in which: -
Figure 1 shows a system according to the present invention;
Figure 2 shows the client site of Figure 1;
Figure 3 shows the server site of Figure 1;
Figure 4 is a flowchart illustrating a client entity registration process;
Figure 5 is a flowchart illustrating a reminder process;
Figure 6 is a flowchart illustrating a payment instruction process;
Figure 7 shows a web page produced in the payment instruction process; and
Figure 8 is a flowchart illustrating a payment process.

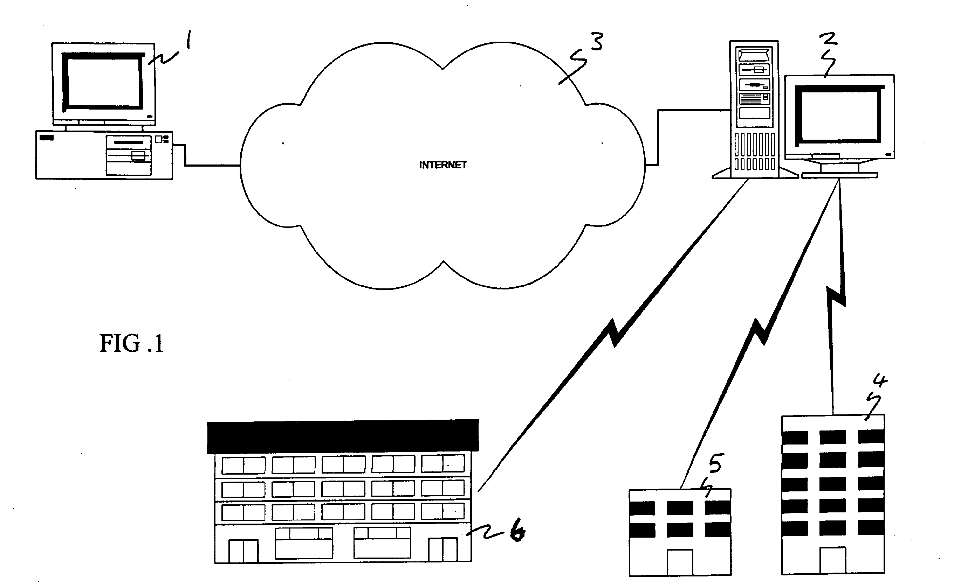

Referring to Figure 1, a client site 1 can communicate with a server site 2 via the Internet 3. Funds and messages can be sent from the server site 2 to a patent office 4 or a subcontractor 5. The server site 2 can also communicate with a credit card company 6.

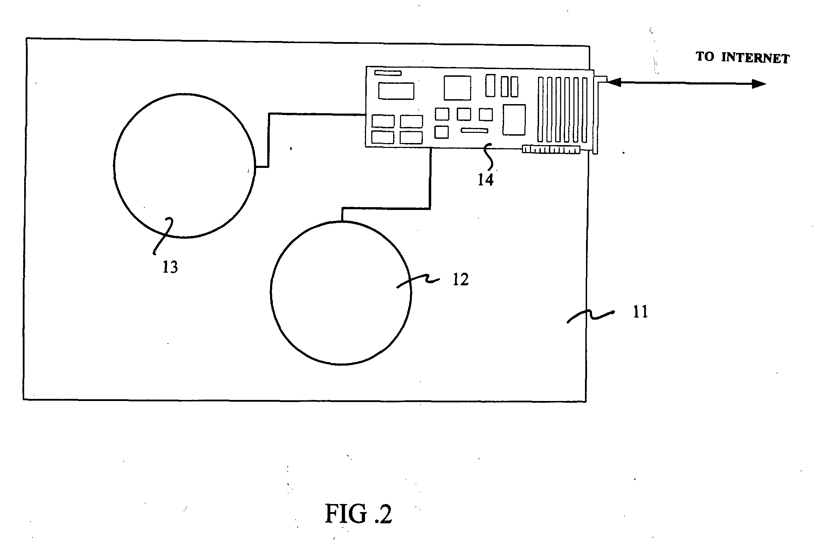

Referring to Figure 2, the client site 1 comprises a personal computer 11 supporting a web browser 12, such as Microsoft Internet Explorer 5, and an e-mail client program 13 such as is provided by Microsoft Outlook Express. The personal computer 11 includes a modem 14 for providing dial-up access to the Internet 3 via an Internet service provider site (not shown).

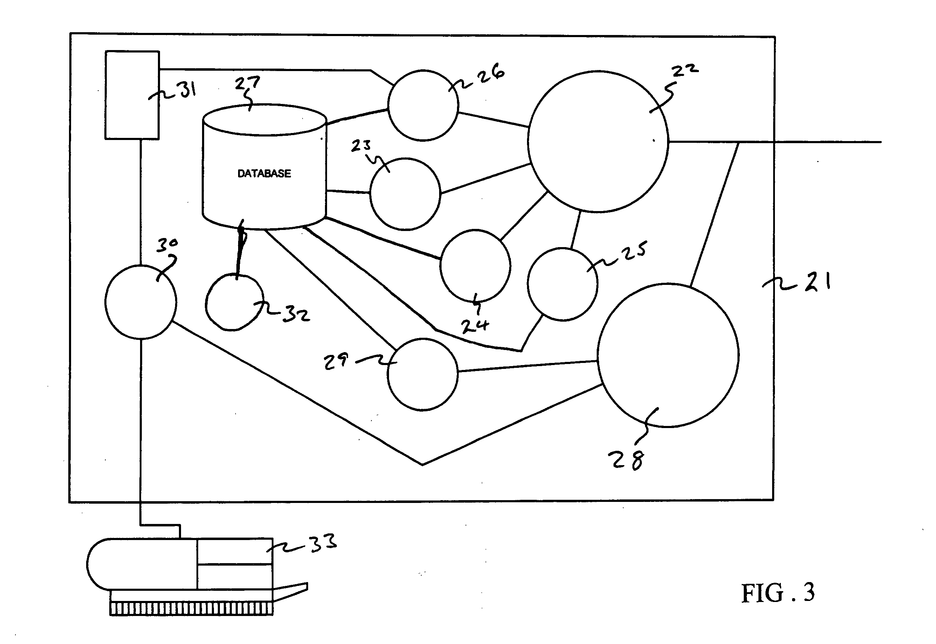

Referring to Figure 3, the server site 2 comprises a powerful personal computer 21 which is directly connected to the Internet 3. The powerful personal computer 21 supports a web server 22, such as Apache, first to fourth CGI programs 23, 24, 25, 26 associated therewith, a database 27, an e-mail client 28, a reminder program 29, a payment program 30, a payment list 31 and confirmation program 32. The powerful personal computer 21 is also connected to a printer 33.

The database contains a client entity table, a case table and a diary table. The client entity table includes id, name, postal address, e-mail address, username, password and credit card details columns. The case table includes case reference, client entity, country, type and number columns. The diary table includes case reference, due date, paid provisional and paid final columns.

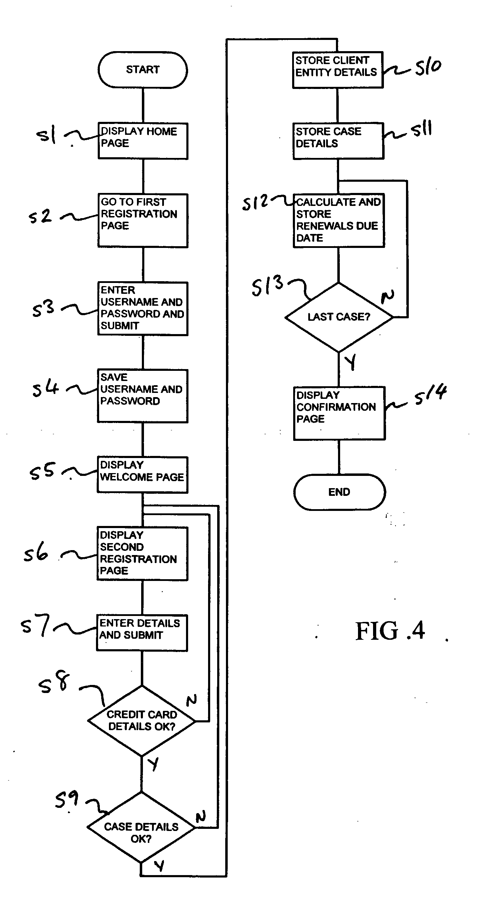

Referring to Figure 4, when a client wishes to use the server 2, it uses the web browser 12 to view a home page of the server site 2 (step s1). The client entity can then follow a hyperlink to a first registration page (step s2). The first registration page is a conventional username and password setting form and has an associated, first CGI program 23.

When the username and password have been entered by the user entity (step s3), the first CGI program 23 stores them in the client entity table (step s4) and generates a welcome page which is displayed by the web browser 12 (step s5).

The client entity can then follow a hyperlink to a second registration page (step s6). The second registration page is an HTML form having controls for receiving the client entity's name and postal and e-mail addresses, details (country, type, number, filing date, grant date) of the client entity's ip portfolio and credit card details and is produced by a second CGI program 24. In this case, no parameters are passed to the second CGI program 24 so the controls are empty and the form has instructions telling the user entity to fill in the required details. When the client entity submits the form (step s7), the details entered are passed as parameters. The second CGI program 24 is again called. However, in response to the presence of the parameters, it first checks that all of the credit card details are present (step s8). If any credit card details are missing or obviously incorrect, the second CGI program 24 resends the second registration page (step s6). However, in this case, the second registration page shows the ip portfolio information that the user entity entered, the credit card details entered by the user entity and an indication of the error in the credit card details. The user entity can then correct the credit card details and resubmit the form (step s7) which is again processed by the second CGI program 24.

If the credit card details are apparently correct (step s8), the second CGI program 24 checks the ip portfolio details for completeness (step s9). If the ip portfolio details are incomplete, the second CGI program 24 resends the second registration page (step s6). The resent page shows the ip portfolio information that the user entity entered, the credit card details entered by the user entity and an indication of the error in the ip portfolio details. The user entity can then correct the ip portfolio details and resubmit the form (step s7) which is again processed by the second CGI program 24.

If all of the details are deemed correct by the second CGI program 24, it stores the entered client entity and credit card details in the client entity table (step s10) and the ip portfolio item details in the case table (steps s11). The second CGI program 24 then determines the next renewal fee due dates for the entered ip portfolio items and stores these dates in a diary table (steps s12 and s13). Finally, the second CGI program 24 generates a confirmation page that is sent to the web browser (step s14).

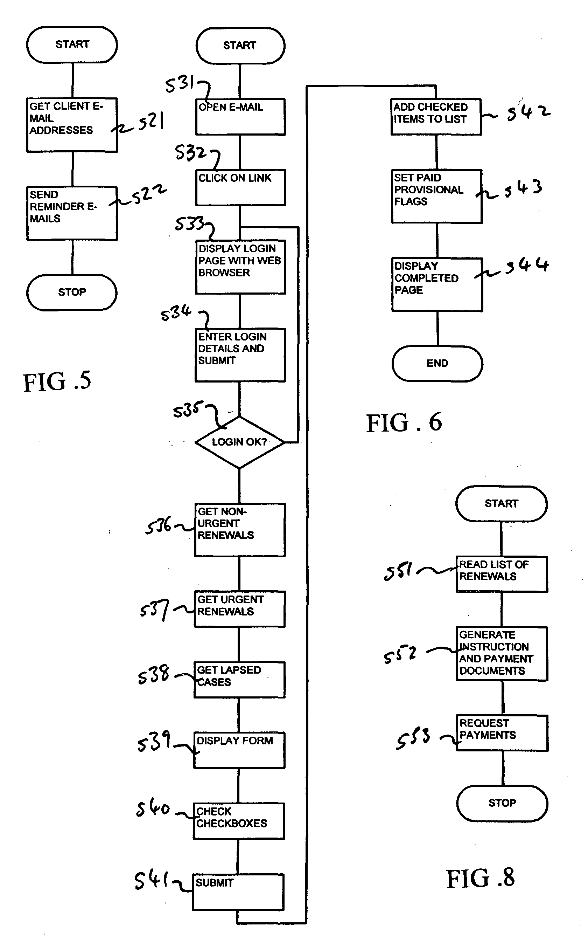

The generation and transmission of reminders will now be described with reference to Figure 5. At regular intervals, e.g. weekly, a reminder program 29 is run on the powerful personal computer 21, this program retrieves the e-mail addresses of client entities for whom there are renewals due dates within the following three months from the database by means of a suitable SQL statement (step s21). The reminder program then sends an e-mail to each of the retrieved addresses (step s22). These e-mails comprise at least the URL of a login page of the web server and preferably a symbolic link to that page. Consequently, the client entity receiving such a message can simply "click", or the equivalent thereof, on the URL or symbolic link in the displayed e-mail to cause the web browser to retrieve the login page.

A client instruction process will now be described with reference to Figure 6. When a client entity receives an e-mail from the reminder program, it opens the e-mail (step s31) and "clicks" on the URL or symbolic link (step s32), causing the web browser to request the login page (step s33). The login page is a conventional HTML login form and has a submit button. When the submit button is clicked (step s34), the username and password entered by the client entity are passed as parameters to the third CGI program 25.

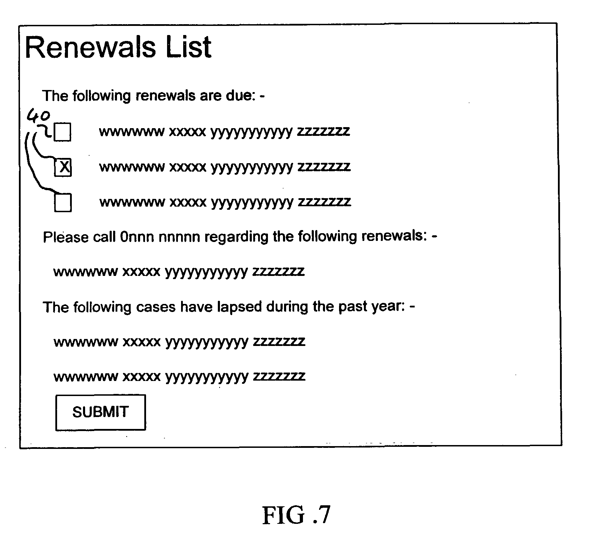

The third CGI program 25 checks the username and password (step s35) and, if they are not correct, causes the login form to be resent to the web browser 12 (step s33). If the username and password are correct, the third CGI program 25 generates an HTML form web page having three sections (see Figure 7). For the first section the third CGI program retrieves, for the logged in user entity, the reference id, the country, the type and the number for each renewal due in the period from seven days after the present to three months after the present and generates HTML to display this information with a checkbox control 40 for each renewal (step s36). The "value" of each checkbox control 40 is set to the reference id of the corresponding case. For the second section, the third CGI program 25 retrieves, for the logged in user entity, the reference id, the country, the type and the number for each renewal due in the following seven days and generates HTML to display this information with an invitation to the user entity to call the server operator by telephone (step s37). For the third section, the third CGI program 25 retrieves, for the logged in user entity, the reference id, the country, the type and the number for each renewal due in the preceding year for which the paid final field is not TRUE and generates HTML to display this information with a notice to the effect that these items had lapsed according to the server operator's records (step s38). The generated HTML form is then sent to the web browser 12 (step s39).

In order to have selected renewal fees paid, the user entity checks the checkbox controls 40 corresponding to the renewals to be paid (steps s40) and submits the form (step s41), causing the "values" of the checked checkboxes to be passed as parameters. These parameters are then processed by the fourth CGI program 26. The fourth CGI program 26 adds these parameters, which are case reference ids, to the list of renewals to be paid 31 (step s42) and sets the paid provisional fields to TRUE in the corresponding diary table records (step s43). The fourth CGI program 26 then generates a confirmation page which is sent to the web browser (step s44).

The payment of renewal fees will now be described with reference to Figure 8. At regular intervals, e.g. daily, the payer program 30 reads and clears the list of renewals to be paid 31 (step s51) and for each item generates the appropriate instructing document, e.g. letter, fax or e-mail, to be sent to the relevant patent office or a local address for service and any necessary cheques or deposit account authorisations (step s52). Paper documents are produced using the printer 33. The documents are then sent to their appropriate destinations. The payer program also requests payment for the renewal payments from the credit card company or companies of the client entities for whom the renewals are being paid (step s53).

The confirmation program 32 is used by an operator to set paid final fields in a diary table to TRUE when confirmation of a payment is received. The confirmation program also informs the operator of overdue confirmations and calculates the next renewal date for each case for which the paid final field is set to TRUE.

It will be appreciated that many variations may be made to the above-described embodiment. For instance world wide web technology may be superceded by a technology providing similar but enhanced functionality. Furthermore, the present invention may be performed over an network other than the Internet, for instance the MIPEX network.

The page illustrated in Figure 7 may be modified to show the cost of paying each renewal shown in the first section and the user entity may be presented with the options of confirming or cancelling the payment of the renewal fees after having the total cost for the checked renewals displayed.

As an alternative to credit card payment, a client entity may be required to maintain a deposit account with the server operator.

Furthermore, the system could be employed on an Intranet within a large corporation so that different divisions can easily inform a central intellectual property department of the ip rights that need to be renewed for their operations.

## Claims

1. A method comprising: -
maintaining a record of information for determining the approach of task due dates for a plurality of client entities;
maintaining hypermedia server means for receiving task performance instruction;
at a plurality of times, sending an electronic message to each client entity for which a task due date falls within a succeeding predetermined period; and
receiving an instruction to perform a task from a client entity by means of the hypermedia server means,
wherein said electronic messages include means for causing a client entity to request a page from the hypermedia server means.

2. A method according to claim 1, wherein the electronic messages do not identify the task due dates to which they relate.

3. A method according to claim 1 or 2, including, after receiving said page request, building an HTML form with a control element for each task due date for the requesting client entity, the control elements being configured for indicating whether the respective task is to be performed.

4. A method according to claim 1, 2 or 3, responding to said page request by sending a login form to the requesting client entity, the login form including controls for the input of a username and a password.

5. A method according to any preceding claims, including performing said task in response to said instruction.

6. A method according to claim 5, wherein said task is payment of a renewal fee for an intellectual property right.

7. An apparatus for administering a repetitive task, the apparatus comprising: -
hypermedia server means for receiving task performance instruction; and
data processing means configured for maintaining a record of information for determining the approach of task due dates for a plurality of client entities and, at a plurality of times, sending an electronic message to each client entity for which a task due date falls within a succeeding predetermined period,
wherein said electronic messages include means for causing a client entity to request a page from the hypermedia server means.

8. An apparatus according to claim 7, wherein the electronic messages do not identify the task due dates to which they relate.

9. An apparatus according to claim 7 or 8, wherein the hypermedia server means is configured for building an HTML form with a control element for each task due date for the requesting client entity, after receiving said page request, the control elements being configured for indicating whether the respective task is to be performed.

10. An apparatus according to claim 7, 8 or 9, wherein the hypermedia server means is responsive to said page request to send a login form to the requesting client entity, the login form including controls for the input of a username and a password.
